(19) Europäisches Patentamt
European Patent Office
Office européen des brevets

(11) EP 3 644 417 B1

(12) # EUROPEAN PATENT SPECIFICATION

(45) Date of publication and mention of the grant of the patent:
**04.05.2022 Bulletin 2022/18**

(21) Application number: **19204784.3**

(22) Date of filing: **23.10.2019**

(51) International Patent Classification (IPC):
***H01M 4/525*** *(2010.01)* ***H01M 10/0525*** *(2010.01)*
***H01M 10/0567*** *(2010.01)* *H01M 10/0568* *(2010.01)*
*H01M 10/0569* *(2010.01)* *H01M 4/02* *(2006.01)*

(52) Cooperative Patent Classification (CPC):
**H01M 4/525; H01M 10/0525; H01M 10/0567;**
H01M 10/0568; H01M 10/0569; H01M 2004/028;
H01M 2300/0025; Y02E 60/10

(54) **LITHIUM SECONDARY BATTERY INCLUDING AN ELECTROLYTE WITH AN ISOCYANATE COMPOUND**

LITHIUMSEKUNDÄRBATTERIE UMFASSEND EINEN ELEKTROLYTEN MIT EINER ISOCYANATVERBINDUNG

BATTERIE SECONDAIRE AU LITHIUM INCLUANT UN ÉLECTROLYTE AVEC UN COMPOSÉ ISOCYANATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.10.2018 KR 20180126859**

(43) Date of publication of application:
**29.04.2020 Bulletin 2020/18**

(73) Proprietor: **Samsung SDI Co., Ltd.**
**Gyeonggi-do 17084 (KR)**

(72) Inventors:
- **KIM, Soojin**
  **17084 Gyeonggi-do (KR)**
- **SHATUNOV, Pavel**
  **17084 Gyeonggi-do (KR)**
- **PARK, Huijung**
  **17084 Gyeonggi-do (KR)**
- **LEE, Junyong**
  **17084 Gyeonggi-do (KR)**
- **KIM, Taesik**
  **17084 Gyeonggi-do (KR)**

(74) Representative: **Russell, Tim**
**Venner Shipley LLP**
**200 Aldersgate**
**London EC1A 4HD (GB)**

(56) References cited:
**EP-A1- 2 999 030** **EP-A1- 3 203 568**
**JP-A- 2011 014 379** **KR-A- 20180 041 602**
**US-A1- 2016 351 963** **US-A1- 2017 250 443**

- **S. WANG ET AL: "A new additive 3-Isocyanatopropyltriethoxysilane to improve electrochemical performance of Li/NCM622 half-cell at high voltage", JOURNAL OF POWER SOURCES, vol. 423, 22 March 2019 (2019-03-22), pages 90-97, XP085656105, ISSN: 0378-7753, DOI: 10.1016/J.JPOWSOUR.2019.03.046**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 644 417 B1

**Description**

BACKGROUND

1. Field

Embodiments relate to a lithium secondary battery including an isocyanate compound.

2. Description of the Related Art

Lithium secondary batteries may be used as power sources for driving portable electronic appliances such as video cameras, mobile phones, and notebook computers. Rechargeable lithium secondary batteries may have three times higher energy density per unit weight than, e.g., lead batteries, nickel-cadmium batteries, nickel metal hydride batteries, and nickel-zinc batteries, and may be charged at high speed.

As cathode active materials included in cathodes of lithium secondary batteries, lithium-containing metal oxides may be used. For example, a composite oxide of lithium and cobalt (Co), manganese (Mn), nickel (Ni), or a combination thereof may be used. Among these, in the case of high-Ni-content cathode active materials, studies have recently been conducted on such materials because they may realize a higher capacity battery as compared with lithium cobalt oxide.

EP 3203568 A1 describes a non-aqueous electrolyte comprising a non-aqueous solvent, a lithium salt and an additive that is an isocyanate-based compound comprising a carbon-carbon triple bond.

US 2017/0250443 A1 describes an electrolyte for a lithium battery and a lithium battery including the electrolyte, the electrolyte including an isocyanate compound represented by formula 1.

US 2016/0351963 A1 describes an electrolyte additive which includes a sulfone compound wherein the sulfonyl group is directly bonded to a halide group and an electron withdrawing group.

EP 3396769 A1 describes an electrolyte solution for a lithium battery including an electrolyte salt, an organic solvent and an additive including an isocyanate compound represented by formula 1.

JP2011/014379 A describes a non-aqueous electrolyte secondary battery containing a positive electrode active material and an electrolyte containing an electrolytic solution containing a predetermined isocyanate compound and a method for producing the same.

EP 2999030A1 describes an electrode for a secondary battery with an electrode active material combination layer formed on one or both sides of the electrode current collector and a polyurethane-based coating layer formed on the electrode active material combination layer.

SUMMARY

The embodiments may be realized by providing a lithium secondary battery according to the appended claims.

The isocyanate compound used according to the present invention is a compound represented by one of Formulae 2-2, 2-4 and 2-5:

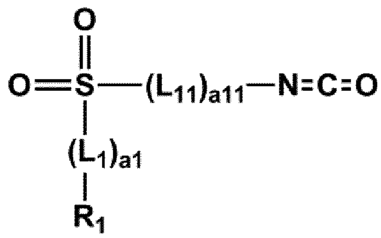

**2-2**

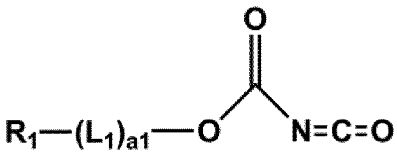

2-4

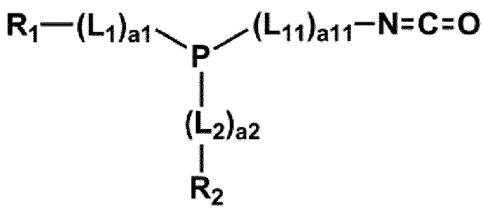

2-5

wherein, in Formulae 2-2, 2-4 and 2-5, $L_1$, $L_2$, $L_{11}$, $R_1$, $R_2$, a1, a2 and a11 are as defined in the appended claims (see also description herein below).

The isocyanate compound may include one isocyanate group or two isocyanate groups.

The isocyanate compound may be one of compounds 3 & 8 to 10 below.

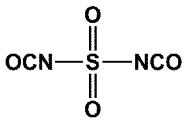

3

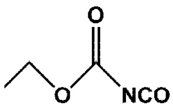

8

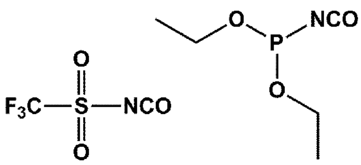

9 10

The isocyanate compound may be included in the electrolyte in an amount of about 0.005 wt% to about 10 wt%, based on a total weight of the electrolyte.

The isocyanate compound may be included in the electrolyte in an amount of about 0.01 wt% to about 5 wt%, based on a total weight of the electrolyte.

The non-aqueous solvent may include ethylmethyl carbonate, methylpropyl carbonate, ethylpropyl carbonate, dimethyl carbonate, diethyl carbonate, dipropyl carbonate, propylene carbonate, ethylenecarbonate, fluoroethylene carbonate, butylene carbonate, ethyl propionate, propyl propionate, ethyl butyrate, acetonitrile, dimethyl sulfoxide, dimethyl formamide, dimethylacetamide, gamma-valerolactone, gamma-butyrolactone, or tetrahydrofuran.

The lithium salt may include $LiPF_6$, $LiBF_4$, $LiSbF_6$, $LiAsF_6$, $LiClO_4$, LiBr, $CH_3SO_3Li$, lithium chloroborane, lower aliphatic carboxylic acid lithium, lithium 4-phenylborate, lithium imide, $LiCF_3CO_2$, $LiB_{10}Cl_{10}$, $LiCF_3SO_3$, $Li(CF_3SO_2)_2N$, $LiC_4F_9SO_3$, $LiAlO_2$, $LiAlCl_4$, LiCl, LiI, or $LiN(C_xF_{2x+1}SO_2)(C_yF_{2y+1}SO_2)$, in which each of x and y is independently an integer of 1 to 20.

A concentration of the lithium salt in the electrolyte may be about 0.01 M to about 5.0 M.

The cathode active material may be represented by Formula 3 or Formula 4 below:

<Formula 3> $Li_{x'}Ni_{y}Co_{1-y'y''}Al_{y''}O_2$

<Formula 4> $Li_{x'}Ni_{y'}Co_{1-y'-y''}Mn_{y''}O_2$

wherein, in Formulae 3 and 4, x', y', and y" may satisfy the following relations: $0.9 \leq x' \leq 1.2$, $0.6 < y' \leq 0.98$, $0 < y'' < 0.1$, and $0 < 1-y'-y'' < 0.2$.

The anode may include an anode active material which comprises lithium metal, a metal alloyable with lithium, a transition metal oxide, a non-transition metal oxide, or a carbon material.

The lithium secondary battery may further include a urethane group-containing film on a surface of the cathode or the anode.

The urethane group-containing film may be on the surface of the anode.

The cathode or the anode may include a -OH group or $H_2O$ on a surface thereof, and a urethane group of the

urethane group-containing film may be formed by a reaction of the -OH group or the $H_2O$ with an isocyanate group of the isocyanate compound.

A DCIR increase rate after 200 charge-discharge cycles at 45 °C may be 100 % or less.

According to an aspect, there is provided a lithium secondary battery as set out in claim 1. Additional features are set out in claims 2 to 15.

BRIEF DESCRIPTION OF THE DRAWING

Features will be apparent to those of skill in the art by describing in detail exemplary embodiments with reference to the attached drawing in which:

The FIGURE 1 illustrates a schematic view of a lithium secondary battery according to an embodiment.

DETAILED DESCRIPTION

Example embodiments will now be described more fully hereinafter with reference to the accompanying drawing; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figure, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present. Like reference numerals refer to like elements throughout. As used herein, the term "or" is not an exclusive term, and includes any individual or combination of listed elements, e.g., "A or B" would include A, B, or A and B.

Hereinafter, lithium secondary batteries according to embodiments will be described in detail.

As used herein, the term "hydrocarbon" refers to an organic compound including carbon and hydrogen. For example, hydrocarbon may include a single bond, a double bond, a triple bond, or a combination thereof.

As used herein, "a" and "b" in "$C_a$-$C_b$" refer to the number of carbon atoms in a specific functional group. For example, the functional group may include "a" to "b" carbon atoms. Therefore, for example, the "$C_1$-$C_4$ alkyl groups" refers to alkyl groups having 1 to 4 carbon atoms, such as $CH_{3-}$, $CH_3CH_{2-}$, $CH_3CH_2CH_{2-}$, $(CH_3)_2CH$-, $CH_3CH_2CH_2CH_{2-}$, $CH_3CH_2CH(CH_3)$-, and $(CH_3)_3C$-.

Certain radical nomenclature may include mono-radicals or di-radicals depending on the context. For example, when one substituent requires two connection points in the remaining molecule, it is to be understood that the substituent is a di-radical. For example, the substituents recognized as alkyl groups requiring two connecting points include di-radicals such as $-CH_2-$, $-CH_2CH_2-$, and $-CH_2CH(CH_3)CH_2-$. Another radical nomenclature clearly indicates that the radical is a di-radical such as "alkylene" or "alkenylene".

As used herein, the term "alkyl group" or "alkylene group" refers to a branched or unbranched aliphatic hydrocarbon group. In an embodiment, the alkyl group may be substituted or unsubstituted. Examples of the alkyl group may include a methyl group, an ethyl group, a propyl group, an isopropyl group, a butyl group, an isobutyl group, a tert-butyl group, a pentyl group, a hexyl group, a cyclopropyl group, a cyclopentyl group, a cyclohexyl group, and a cycloheptyl group. In another embodiment, these alkyl groups may be selectively substituted. In another embodiment, the alkyl group may include 1 to 6 carbon atoms. Examples of the alkyl group having 1 to 6 carbon atoms may include a methyl group, an ethyl group, a propyl group, an iso-propyl group, a butyl group, an isobutyl group, a sec-butyl group, a pentyl group, a 3-pentyl group, and a hexyl group.

As used herein, the term "alkenyl group" is a hydrocarbon group having 2 to 20 carbon atoms including at least one carbon-carbon double bond, and examples thereof may include an ethenyl group, a 1-propenyl group, a 2-propenyl group, a 2-methyl-1-propenyl group, a 1-butenyl group, a 2-butenyl group, a cyclopropenyl group, a cyclopentenyl group, a cyclohexenyl group, and a cyclopentenyl group. In another embodiment, the alkenyl group may be substituted or unsubstituted. In another embodiment, the number of carbon atoms in the alkenyl group may be 2 to 40.

As used herein, the term "alkynyl group" is a hydrocarbon group having 2 to 20 carbon atoms including at least one carbon-carbon triple bond, and examples thereof may include an ethynyl group, a 1-propynyl group, a 2-propynyl group, a 1-butynyl group, and a 2-butynyl group. In another embodiment, the alkynyl group may be substituted or unsubstituted.

As used herein, the substituent is derived from an unsubstituted parent group. Here, at least one hydrogen atom is substituted with another atom or functional group. Unless otherwise expressed, when the function group is considered "substituted", it may mean that the functional group is substituted with at least one substituent selected from, e.g., a $C_1$-$C_{20}$ alkyl group, a $C_2$-$C_{20}$ alkenyl group, a $C_2$-$C_{20}$ alkynyl group, a $C_1$-$C_{20}$ alkoxy group, halogen, a cyano

group, a hydroxy group, and a nitro group. When it is described that one functional group is "selectively substituted", the functional group may be substituted with the aforementioned substituent.

A lithium secondary battery according to an aspect of an embodiment may include, e.g., a cathode; an anode; and an electrolyte between the cathode and the anode. In an implementation, the cathode may include a cathode active material represented by Formula 1 below. In an implementation, the electrolyte may include a lithium salt; a non-aqueous solvent; and an isocyanate compound (e.g., an isocyanate-based compound).

<Formula 1> $Li_xNi_yM_{1-y}O_{2-z}A_z$

In Formula 1,

x, y, and z, may satisfy the following relations: $0.9 \leq x \leq 1.2$, $0.6 < y \leq 0.98$, and $0 \leq z < 0.2$.
M may be, e.g., Al, Mg, Mn, Co, Fe, Cr, V, Ti, Cu, B, Ca, Zn, Zr, Nb, Mo, Sr, Sb, W, or Bi. For example, M may be one or a combination of Al, Mg, Mn, Co, Fe, Cr, V, Ti, Cu, B, Ca, Zn, Zr, Nb, Mo, Sr, Sb, W, or Bi.

A may be, e.g., an element having an oxidation number of -1 or -2.

When the isocyanate compound is added to the electrolyte, there may be effects of decreasing the resistance before and after formation and decreasing the resistance increase rate due to high-temperature storage.

In an implementation, the isocyanate compound may include at least one isocyanate group (-N=C=O).

Without being bound by theory, the reason why the isocyanate compound is added to the electrolytic solution to improve the performance of the lithium secondary battery will be described in more detail below.

Anions (e.g., $PF_6^-$ anions) or anion side products (e.g., $PF_5$) of a lithium salt included in an electrolyte for a lithium secondary battery may be adsorbed on a cathode film or an anode film during charging and discharging of the lithium secondary battery, thereby causing deterioration of battery characteristics.

A film including a urethane group may be formed on the surface of an electrode by an isocyanate group included in the isocyanate compound prior to the anions (e.g., $PF_6^-$anions) or anion side products (e.g., $PF_5$) of the lithium salt, thereby improving the resistance characteristics of the lithium secondary battery.

According to the present invention, the isocyanate compound may be a compound represented by one of Formulae 2-2, 2-4 and 2-5.

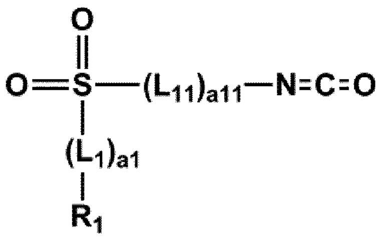

2-2

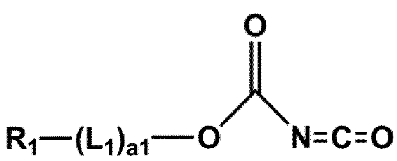

2-4

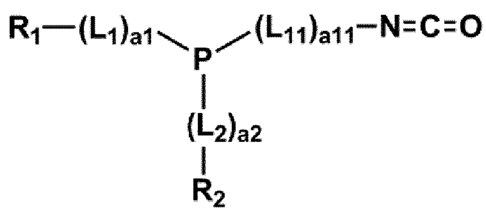

2-5

In formulae 2-2, 2-4 and 2-5, $L_1$, $L_2$ and $L_{11}$ are each independently, e.g., a single bond, *-O-*', or a substituted or unsubstituted $C_1$-$C_{30}$ alkylene group,

a1, a2 and a11 are each independently, e.g., an integer of 1 to 5,
$R_1$ is, e.g., an isocyanate group, a cyano group, a nitro group, an amidino group, a hydrazino group, a hydrazono group, a substituted or unsubstituted $C_1$-$C_{20}$ alkyl group, a substituted or unsubstituted $C_2$-$C_{20}$ alkenyl group, a substituted or unsubstituted $C_1$-$C_{20}$ alkoxy group, -Si(Ql)(Q2) (Q3), -N(Q1)(Q2), -B(Q1)(Q2), -C(=O)(Q1),

-S(=O)2(Q1), or-P(=O)(Q1)(Q2),

$R_2$ is

e.g., -F, -Cl, -Br, -I, an isocyanate group, a cyano group, a nitro group, an amidino group, a hydrazino group, hydrazono group, a substituted or unsubstituted $C_1$-$C_{20}$ alkyl group (e.g., a -$CF_3$ group), a substituted or unsubstituted $C_2$-$C_{20}$ alkenyl group, a substituted or unsubstituted $C_2$-$C_{20}$ alkynyl group, a substituted or unsubstituted $C_1$-$C_{20}$ alkoxy group, -Si($Q_1$)($Q_2$)($Q_3$), -N($Q_1$)($Q_2$), -B($Q_1$)($Q_2$), -C(=O)($Q_1$), -S(=O)$_2$($Q_1$), or-P(=O)($Q_1$)($Q_2$),

In an implementation, at least one substituent of the substituted $C_1$-$C_{30}$ alkylene group, the substituted $C_1$-$C_{20}$ alkyl group, the substituted $C_2$-$C_{20}$ alkenyl group, the substituted $C_2$-$C_{20}$ alkynyl group, and the substituted $C_1$-$C_{20}$ alkoxy group may be, e.g., deuterium, -F, -Cl, -Br, -I, a hydroxyl group, a cyano group, a nitro group, an amidino group, a hydrazino group, a hydrazono group, a $C_1$-$C_{10}$ alkyl group, a $C_2$-$C_{10}$ alkenyl group, a $C_2$-$C_{10}$ alkynyl group, or a $C_1$-$C_{20}$ alkoxy group.

$Q_1$ to $Q_3$ may each independently be, e.g., hydrogen, deuterium, -F, -Cl, -Br, -I, a hydroxyl group, a cyano group, a nitro group, an amidino group, a hydrazino group, hydrazono group, a $C_1$-$C_{20}$ alkyl group, a $C_2$-$C_{20}$ alkenyl group, a $C_2$-$C_{20}$ alkynyl group, or a $C_1$-$C_{20}$ alkoxy group.

In an implementation, in Formulae 2-2, 2-4 and 2-5, $R_1$ and $R_2$ may each independently be, e.g., a methyl group, an ethyl group, a n-propyl group, an iso-propyl group, a n-butyl group, an iso-butyl group, a sec-butyl group, a tert-butyl group , a methoxy group, an ethoxy group, an ethenyl group, an isocyanate group, or a -$CF_3$ group.

In an implementation, the isocyanate- compound may include one (e.g., only one) isocyanate group or two (e.g., only two) isocyanate groups.

In an implementation, the isocyanate compound may be, e.g., one of the following Compounds 1 to 10, whereby only compounds 3 & 8 to 10 are part of the present invention.

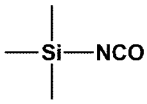
1
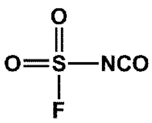
2
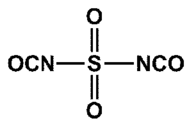
3
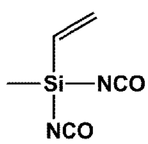
4
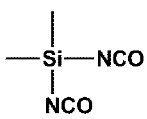
5
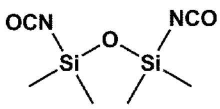
6
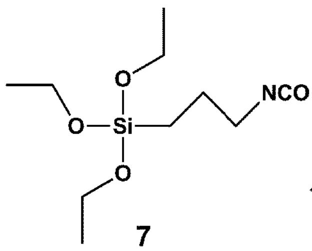
7
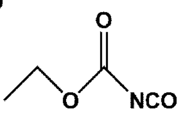
8
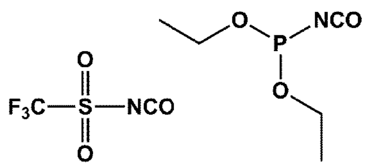
9
10

NB : Compounds 1, 2 & 4 to 7 do not belong to the invention, they are presented for reference only.

As used herein, -NCO is an isocyanate group (-N=C=O).

In an implementation, the isocyanate compound may be included in the electrolyte in an amount of about 0.005 wt% to about 10 wt%, e.g., about 0.01 wt% to about 5 wt%, based on a total weight of the electrolyte. In an implementation, a suitable amount of the isocyanate compound may be used as desired. In an implementation, the isocyanate compound may be included in the electrolyte in an amount of, e.g., about 0.01 wt% to about 4 wt%, based on the total weight of the electrolyte. In an implementation, the isocyanate compound may be included in the electrolyte in an amount of, e.g., about 0.01 wt% to about 3 wt%, based on the total weight of the electrolyte. In an implementation, the isocyanate compound may be included in the electrolyte in an amount of, e.g., about 0.01 wt% to about 2 wt%, based on the total weight of the electrolyte. In an implementation, the isocyanate compound may be included in the electrolyte in an amount of, e.g., about 0.05 wt% to about 2 wt%, based on the total weight of the electrolyte. In an implementation, the isocyanate compound may be included in the electrolyte in an amount of, e.g., about 0.05 wt% to about 1 wt%, based on the total weight of the electrolyte. Further improved battery characteristics may be obtained within the above amount ranges. If the amount of the isocyanate compound were more than 10 wt%, exceeding the above content range, based on the total weight of the electrolyte, battery life could be reduced. If the amount of the isocyanate compound were to be less than 0.005 wt%, it may be difficult to exhibit a desired effect of the present disclosure.

In an implementation, the non-aqueous solvent may include, e.g., ethylmethyl carbonate (EMC), methylpropyl

carbonate, ethylpropyl carbonate, dimethyl carbonate (DMC), diethyl carbonate (DEC), dipropyl carbonate (DPC), propylene carbonate (PC), ethylenecarbonate (EC), fluoroethylene carbonate (FEC), butylene carbonate, ethyl propionate (EP), propyl propionate (PP), ethyl butyrate, acetonitrile, dimethyl sulfoxide, dimethyl formamide, dimethylacetamide, gamma-valerolactone, gamma-butyrolactone (GBL), or tetrahydrofuran. In an implementation, a suitable non-aqueous solvent may be used.

In an implementation, the concentration of the lithium salt in the electrolyte may be, e.g., about 0.01 M to about 5.0 M. A suitable concentration of the lithium salt may be used as needed. Further improved battery characteristics may be obtained within the above concentration range.

In an implementation, a suitable lithium salt may be used. In an implementation, the lithium salt may include $LiPF_6$, $LiBF_4$, $LiSbF_6$, $LiAsF_6$, $LiClO_4$, LiBr, $CH_3SO_3Li$, lithium chloroborane, lower aliphatic carboxylic acid lithium, lithium 4-phenylborate, lithium imide, $LiCF_3CO_2$, $LiB_{10}Cl_{10}$, $LiCF_3SO_3$, $Li(CF_3SO_2)_2N$, $LiC_4F_9SO_3$,$LiAlO_2$, $LiAlCl_4$, LiCl, LiI, or $LiN(C_xF_{2x+1}SO_2)(C_yF_{2y+1}SO_2)$ (in which each of x and y is an integer of 1 to 20).

The electrolyte may be present in a liquid or gel state. The electrolyte may be prepared by adding the lithium salt and the isocyanate compound to the non-aqueous solvent.

The lithium secondary battery may have a suitable form. Examples of the lithium secondary battery may include a lithium ion battery, a lithium ion polymer battery, and a lithium sulfur battery.

In an implementation, the lithium secondary battery may be manufactured by the following method.

First, a cathode may be prepared.

For example, a cathode active material composition in which a cathode active material, a conductive material, a binder, and a solvent are mixed may be prepared. A cathode plate may be prepared by directly coating a metal current collector with the cathode active material composition. In an implementation, the cathode plate may be prepared by casting the cathode active material composition onto a separate support, separating a film from the support and then laminating the separated film on a metal current collector.

In an implementation, the cathode may include a cathode active material represented by Formula 1 above. In an implementation, in Formula 1 above, A may be, e.g., a halogen or sulfur.

In an implementation, in Formula 1 above, y indicates the content of Ni in the cathode active material, and $0.6<y\leq0.98$ may be satisfied. In an implementation, in Formula 1 above $0.7\leq y\leq0.98$ may be satisfied. In an implementation, in Formula 1 above $0.8\leq y\leq0.9$ may be satisfied. In an implementation, in Formula 1 above $0.8\leq y\leq0.88$ may be satisfied. If the content of Ni in the cathode active material were to be 60 % or less or the cathode active material containing no Ni were to be applied, an increase in surface resistance may not be great because surface reactivity at a voltage of 4.2 V or less is not high, the effect of surface reformation due to the material of Formula 1 could be slight, so that the effect of performance improvement may not be observed, and high capacity may not be exhibited.

In an implementation, the cathode active material may be, e.g., represented by Formula 3 or 4 below.

<Formula 3> $Li_xNi_yCo_{1-y'-y''}Al_{y''}O_2$

<Formula 4> $Li_xNi_yCo_{1-y'-y''}Mn_{y''}O_2$

In Formulae 3 and 4, x', y', and y" may satisfy the following relations: $0.9\leq x'\leq1.2$, $0.6<y'\leq0.98$, $0<y''<0.1$, and $0<1-y'-y''<0.2$.

In an implementation, a compound having a coating layer on the surface of the compound may be used, or a mixture of the compound and a compound having a coating layer may also be used. The coating layer may include a coating element compound such as oxide of a coating element, hydroxide of a coating element, oxyhydroxide of a coating element, oxycarbonate of a coating element, or hydroxycarbonate of a coating element. The compound constituting the coating layer may be amorphous or crystalline. As the coating element included in the coating layer, Mg, Al, Co, K, Na, Ca, Si, Ti, V, Sn, Ge, Ga, B, As, Zr, or a mixture thereof may be used. In the process of forming the coating layer, any coating method may be used (e.g., spray coating, dipping, or the like) if the method does not adversely influence the physical properties of the cathode active material by using such elements in the compound.

In an implementation, the conductive material may include, e.g., carbon black, graphite microparticles, or the like. In an implementation, a suitable conductive material may be used.

In an implementation, the binder may include, e.g., a vinylidene fluoride/hexafluoroproylene copolymer, polyvinylidene fluoride (PVDF), polyacrylonitrile, polymethyl methacrylate, polytetrafluoroethylene, a mixture thereof, or a styrene butadiene rubber polymer.

In an implementation, the solvent may include, e.g., N-methylpyrrolidone, acetone, or water.

The amount of the cathode active material, the amount of the conductive material, the amount of the binder, and the amount of the solvent may be suitable levels for a lithium battery. In an implementation, at least one of the conductive material, the binder, and the solvent may be omitted depending on the use and configuration of the lithium battery.

Next, an anode may be prepared.

For example, an anode active material composition in which an anode active material, a conductive material, a binder, and a solvent are mixed may be prepared. In an implementation, an anode plate may be prepared by directly coating a metal current collector with the anode active material composition and drying the anode active material composition. In an implementation, the anode plate may be prepared by casting the anode active material composition onto a separate support, separating a film from the support and then laminating the separated film on a metal current collector.

As the anode active material, a suitable anode active material for a lithium secondary battery may be used. In an implementation, the anode active material may include, e.g., a lithium metal, a metal alloyable with lithium, a transition metal oxide, a non-transition metal oxide, or a carbon material.

In an implementation, the metal alloyable with lithium may be, e.g., Si, Sn, Al, Ge, Pb, Bi, Sb, a Si-Y' alloy (in which Y' is selected from alkali metals, alkaline earth metals, Group 13 elements, Group 14 elements, transition metals, rare earth elements, and combinations thereof, not Si), or a Sn-Y" alloy (in which Y" is selected from alkali metals, alkaline earth metals, Group 13 elements, Group 14 elements, transition metals, rare earth elements, and combinations thereof, not Sn). In an implementation, Y' and Y" may be, e.g., Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, or Te.

In an implementation, the transition metal oxide may be, e.g., lithium titanium oxide, vanadium oxide, or lithium vanadium oxide.

In an implementation, the non-transition metal oxide may be $SnO_2$ or $SiO_x$ (in which $0<x<2$).

In an implementation, the carbon material may be, e.g., crystalline carbon, amorphous carbon, or a mixture thereof. In an implementation, the crystalline carbon may be, e.g., graphite such as natural graphite or artificial graphite of an amorphous, plate-like, flake-like, spherical or fibrous form. In an implementation, the amorphous carbon may be, e.g., soft carbon (low-temperature sintered carbon), hard carbon, mesophase pitch carbide, or fired coke.

The conductive material, binder and solvent in the anode active material composition may be the same as those in the cathode active material composition.

The amount of the anode active material, the amount of the conductive material, the amount of the binder, and the amount of the solvent may be suitable levels for a lithium battery. In an implementation, at least one of the conductive material, the binder, and the solvent may be omitted, depending on the use and configuration of the lithium battery.

In an implementation, the lithium secondary battery may include a film including a urethane group (-NH-C(=O)-) (e.g., a urethane group-containing film) on the surface of the cathode or the anode. In an implementation, the lithium secondary battery may include the urethane group-containing film on the surface of the anode.

In an implementation, the cathode or the anode may include, e.g., a -OH group or $H_2O$ on the surface thereof.

The urethane group (-NH-C(=O)-) of the urethane group-containing film may be formed by a reaction of the -OH group or the $H_2O$ (from the surface of the cathode or anode) with an isocyanate group (e.g., from the isocyanate compound of the electrolyte).

Next, a separator to be inserted between the cathode and the anode may be prepared.

The separator may include a suitable separator for a lithium secondary battery. A separator having low resistance to the movement of ions in the electrolyte and superior in electrolyte wettability may be used. In an implementation, the separator may include, e.g., glass fiber, polyester, polyethylene, polypropylene, polytetrafluoroethylene (PTFE), or combinations thereof, and may be made in the form of nonwoven fabric or woven fabric. For example, a windable separator including polyethylene, polypropylene, or the like may be used in a lithium ion battery, and a separator having good electrolyte impregnation ability may be used in a lithium ion polymer battery. For example, the separator may be produced by the following method.

A polymer resin, a filler, and a solvent may be mixed to prepare a separator composition. The separator composition may be directly applied on an electrode and dried to form a separator. In an implementation, the separator composition may be cast on a support and dried to form a separation film, the separation film may be separated from the support, and then the separation film may be laminated on the electrode to form a separator.

The polymer resin used in the production of the separator may include a suitable material of a binder of an electrode plate. For example, as the polymer resin, a vinylidene fluoride/hexafluoropropylene copolymer, polyvinylidene fluoride (PVDF), polyacrylonitrile, polymethyl methacrylate, or a mixture thereof may be used.

Next, the aforementioned electrolyte for the lithium secondary battery may be prepared.

As shown in the FIGURE 1, a separator 2 may be located between a cathode 3 and an anode 4 to form a battery structure. The battery structure is laminated and then impregnated with an organic electrolyte, and the resulting product is accommodated in a battery case 5 and sealed to complete a lithium ion polymer battery. In this case, the cathode 3 and the anode 4 may be attached to each other through a protective tape 6, and each of the cathode 3 and the anode 4 may have an electrode tap 7 located to partially protrude outward.

In an implementation, the lithium secondary battery 1 may include a cathode 3, an anode 4, and a separator 2. The anode 4, the cathode 3, and the separator 2 may be wound or folded and accommodated in a battery case. Then,

an electrolyte for a lithium secondary battery may be injected into the battery case, and the battery case may be sealed with a cap assembly to complete the lithium secondary battery. The battery case 5 may have a cylindrical shape, a rectangular shape, or a thin film shape. For example, the lithium secondary battery may be a large-sized thin-film battery. The lithium secondary battery may be a lithium ion battery.

In an implementation, a plurality of battery structures may be laminated to form a battery pack, and this battery pack may be used in appliances requiring high capacity and high power. For example, the battery pack may be used in notebooks, smart phones, electric vehicles, and the like.

In an implementation, a DCIR increase rate of the lithium secondary battery according to an embodiment after 200 charge-discharge cycles at 45 °C may be 100 % or less.

In an implementation, the lithium secondary battery may exhibit excellent lifetime characteristics and high efficiency characteristics, and may be used in electric vehicles (EVs). For example, the lithium secondary battery may be used in hybrid vehicles such as a plug-in hybrid electric vehicle (PHEV). Further, the lithium secondary battery may be used in the field requiring a large amount of electric power storage. For example, the lithium secondary battery may be used in electric bicycles, power tools, and the like.

Hereinafter, the present disclosure will be described in more detail with reference to Examples, Comparative Example, and Reference Examples.

The following Examples, Comparative Example, and Reference Examples are provided in order to highlight characteristics of one or more embodiments, but it will be understood that the Examples, Comparative Example, and Reference Examples are not to be construed as limiting the scope of the embodiments, nor are the Comparative Examples or Reference Examples to be construed as being outside the scope of the embodiments. Further, it will be understood that the embodiments are not limited to the particular details described in the Examples, Comparative Example, and Reference Examples.

(Manufacture of lithium secondary battery)

Example 1 (not according to the invention)

(Preparation of cathode)

97.4 wt% of $LiNi_{0.8}Co_{0.15}Al_{0.05}O_2$ as a cathode active material, 1.1 wt% of carbon nanotubes and carbon black as a conductive material, and 1.5 wt% of PVDF as a binder were mixed to obtain a mixture, and the mixture was introduced into a N-methyl-2-pyrrolidone solvent and stirred using a mechanical stirrer to prepare a cathode active material composition. The cathode active material composition was applied onto an aluminum foil current collector having a thickness of 12 μm using a coater such that the thickness of solid content per unit area is about 61 μm, dried at 100 °C for 0.5 hours using a hot drier, further dried in vacuum at 120 °C for 4 hours, and then roll-pressed to prepare a cathode provided with a cathode active material layer on the current collector.

(Preparation of anode)

97 wt% of an anode active material including a graphite-Si composite obtained by mixing artificial graphite and natural graphite, 1 wt% of CMC (carboxymethyl cellulose), and 2 wt% of solid content of SBR (styrene butadiene rubber) were mixed to obtain a mixture, and the mixture was introduced into water as a solvent and stirred using a mechanical stirrer to prepare an anode active material composition. The anode active material composition was applied to a thickness of 50 μm onto a copper foil current collector having a thickness of 8 μm using a coater, dried using hot air, and then roll-pressed to prepare an anode provided with an anode active material layer on the current collector.

(Preparation of electrolyte)

1 wt% based on the total weight of the electrolyte of Compound 1 was added to a 1.15 M $LiPF_6$ solution in which ethylene carbonate (EC), propylene carbonate (PC), ethyl propionate (EP), and propyl propionate (PP), as solvents, were mixed at a ratio of 2:1:2:5, to prepare an electrolyte.

(Assembly of veneer pouch cell for material evaluation)

A veneer pouch cell for material evaluation including one punched cathode sheet and one punched anode sheet was manufactured by using a ceramic-coated separator having a thickness of 12 μm together with the cathode, the anode, and the electrolyte, prepared in Example 1.

Example 2 (not according to the invention)

A pouch cell for material evaluation was manufactured in the same manner as in Example 1, except that an electrolyte was prepared by adding 1 wt% of Compound 2 instead of Compound 1.

Example 3

A pouch cell for material evaluation was manufactured in the same manner as in Example 1, except that an electrolyte was prepared by adding 1 wt% of Compound 3 instead of Compound 1.

Example 4 (not according to the invention)

A pouch cell for material evaluation was manufactured in the same manner as in Example 1, except that an electrolyte was prepared by adding 1 wt% of Compound 4 instead of Compound 1.

Example 5 (not according to the invention)

A pouch cell for material evaluation was manufactured in the same manner as in Example 1, except that an electrolyte was prepared by adding 1 wt% of Compound 5 instead of Compound 1.

Example 6 (not according to the invention)

A pouch cell for material evaluation was manufactured in the same manner as in Example 1, except that an electrolyte was prepared by adding 1 wt% of Compound 6 instead of Compound 1.

Example 7 (not according to the invention)

A pouch cell for material evaluation was manufactured in the same manner as in Example 1, except that an electrolyte was prepared by adding 1 wt% of Compound 7 instead of Compound 1.

Example 8

A pouch cell for material evaluation was manufactured in the same manner as in Example 1, except that an electrolyte was prepared by adding 1 wt% of Compound 8 instead of Compound 1.

Example 9

A pouch cell for material evaluation was manufactured in the same manner as in Example 1, except that an electrolyte was prepared by adding 1 wt% of Compound 9 instead of Compound 1.

Example 10

A pouch cell for material evaluation was manufactured in the same manner as in Example 1, except that an electrolyte was prepared by adding 1 wt% of Compound 10 instead of Compound 1.

Comparative Example 1

A pouch cell for material evaluation was manufactured in the same manner as in Example 1, except that an electrolyte was prepared without adding Compound 1.

Reference Example 1

A pouch cell for material evaluation was manufactured in the same manner as in Example 1, except that a cathode active material was prepared by using $LiCoO_2$ instead of the $LiNi_{0.8}Co_{0.15}Al_{0.05}O_2$.

Reference Example 2

A pouch cell for material evaluation was manufactured in the same manner as in Reference Example 1, except

that an electrolyte was prepared without adding Compound 1.

Reference Example 3

A pouch cell for material evaluation was manufactured in the same manner as in Example 1, except that $LiNi_{0.5}Co_{0.2}Mn_{0.3}O_2$ was used instead of $LiNi_{0.8}Co_{0.15}Al_{0.05}O_2$ as a cathode active material.

Reference Example 4

A pouch cell for material evaluation was manufactured in the same manner as in Reference Example 3, except that an electrolyte was prepared without adding Compound 1.

Evaluation Example

In the pouch cells for material evaluation manufactured in Examples 1 to 10, Comparative Example 1 and Reference Examples 1 to 4, in order to separate only resistance from the surface of the cathode, coin half cells were manufactured using only the cathode, and the resistance thereof was measured using electrochemical impedance spectroscopy (EIS). Further, the aforementioned veneer pouch cells for material evaluation were manufactured, and the initial 1C capacitance and the initial charge transfer resistance (Rct) thereof were measured with respect to lifetime and storage characteristics. Then, charge-discharge cycles in which the pouch cells were charged with a constant current up to 4.2 V at a rate of 0.7 C at ambient temperature (25 °C) and high temperature (45 °C), and then charged with a constant voltage up to a current of 0.05 C while maintaining a voltage of 4.2 V were repeated 200 times. Then, discharge capacitance of the pouch cells was measured, and lifetimes thereof were compared. The results thereof are given in Table 1 below.

The lifetime is defined by Equation 1 below.

<Equation 1>

Lifetime [%]= [discharge capacitance after $200^{th}$ cycle / standard capacitance] × 100 (the standard capacitance is a discharge capacitance at $2^{nd}$ cycle)

[Table 1]

| | Half cell resistance EIS(Ω) | Initial 1 C capacitance (mAh) | Initial charge transfer resistance (Rct) (Ω) | Life time at 25 °C (%) | | Life time at 45 °C (%) | |
|---|---|---|---|---|---|---|---|
| | | | | 1 C | 0.2 C | 1 C | 0.2 C |
| Example 1 | 62 | 31.4 | 0.998 | 72.7 | 74.5 | 56.0 | 63.4 |
| Example 2 | 40 | 27.8 | 0.930 | 74.9 | 76.2 | 63.4 | 72.5 |
| Example 3 | 75 | 31.7 | 1.073 | 74.3 | 76.6 | 58.3 | 71.6 |
| Example 4 | 73 | 27.7 | 1.145 | 77.0 | 79.7 | 63.4 | 74.6 |
| Example 5 | 78 | 31.9 | 1.158 | 74.9 | 77.0 | 63.3 | 75.3 |
| Example 6 | 77 | 31.9 | 1.166 | 76.1 | 79.4 | 64.1 | 73.7 |
| Example 7 | 70 | 31.9 | 1.130 | 77.7 | 79.2 | 67.0 | 74.8 |
| Example 8 | 53 | 31.9 | 1.120 | 73.3 | 78.3 | 59.4 | 72.9 |
| Example 9 | 62 | 32.1 | 1.033 | 72.0 | 74.1 | 67.3 | 80.1 |
| Example 10 | 68 | 32.1 | 1.169 | 75.5 | 78.0 | 63.4 | 72.6 |
| Comparative Example 1 | 120 | 32.5 | 1.330 | 69.5 | 78.5 | 53.0 | 68.7 |
| Reference Example 1 | - | 38.0 | 1.62 | 81.54 | - | 78.57 | - |

(continued)

| | Half cell resistance EIS(Ω) | Initial 1 C capacitance (mAh) | Initial charge transfer resistance (Rct) (Ω) | Life time at 25 °C (%) | | Life time at 45 °C (%) | |
|---|---|---|---|---|---|---|---|
| | | | | 1 C | 0.2 C | 1 C | 0.2 C |
| Reference Example 2 | - | 38.9 | 1.51 | 81.81 | - | 78.39 | - |
| Reference Example 3 | - | 36.6 | 0.90 | 87.75 | - | 85.59 | - |
| Reference Example 4 | - | 36.8 | 0.93 | 88.02 | - | 85.68 | - |

NB : Examples 1, 2 & 4 to 7 do not belong to the invention, they are presented for reference only.

As seen in Table 1 above, Examples 1 to 10 (in which an isocyanate compound was included in the electrolyte) exhibited excellent resistance characteristics and high efficiency lifetime characteristics, as compared with Comparative Example 1 (in which an isocyanate compound was not included in the electrolyte).

Further, referring to Reference Examples 1, 2, 3, and 4, it may be seen that Reference Examples 1 and 3 (in which an isocyanate compound was included in the electrolyte) exhibited poor in capacitance characteristics, resistance characteristics, and lifetime characteristics as compared with Reference Examples 2 and 4 (in which an isocyanate compound was not included in the electrolyte). For example, it may be seen that when an LCO cathode active material or a cathode active material having a low Ni content was used, even if the isocyanate compound was added to an electrolyte, not only were effects not improved, but also resistance, capacitance, and/or lifetime characteristics were deteriorated.

It may be seen that when the isocyanate compound according to an embodiment was used together with a lithium transition metal layered cathode active material having a predetermined or particular Ni content, remarkably good effects were exhibited.

Subsequently, a ratio of Rct after 14 days to initial Rct, a ratio of 1 C capacitance after 14 days to initial 1 C capacitance, and ΔV and ΔE after 7 days were measured, and the results thereof are given in Table 2 below.

[Table 2]

| | Rct after 14 days / initial Rct (%) | 1 C capacitance after 14 days / initial 1 C capacitance (%) | ΔV (ml) | ΔE (V) |
|---|---|---|---|---|
| Example 1 | 16.86 | 78.99 | 0.075 | 0.229 |
| Example 2 | 61.77 | 87.10 | 0.160 | 0.178 |
| Example 3 | 40.98 | 84.60 | 0.220 | 0.188 |
| Example 4 | 39.56 | 85.10 | 0.190 | 0.184 |
| Example 5 | 48.49 | 85.80 | 0.240 | 0.181 |
| Example 6 | 49.89 | 85.80 | 0.220 | 0.182 |
| Example 7 | 63.97 | 83.70 | 0.210 | 0.182 |
| Example 8 | 67.46 | 85.70 | 0.400 | 0.181 |
| Example 9 | 53.87 | 86.70 | 0.280 | 0.181 |
| Example 10 | 53.51 | 84.90 | 0.190 | 0.185 |
| Comparative Example 1 | 99.72 | 85.40 | 0.150 | 0.180 |
| Reference Example 1 | 107.6 | 92.4 | N/A | 0.097 |
| Reference Example 2 | 103.4 | 91.4 | N/A | 0.097 |

(continued)

| | Rct after 14 days / initial Rct (%) | 1 C capacitance after 14 days / initial 1 C capacitance (%) | ΔV (ml) | ΔE (V) |
|---|---|---|---|---|
| Reference Example 3 | 98 | 93 | N/A | N/A |
| Reference Example 4 | 95 | 91 | N/A | N/A |

NB : Examples 1, 2 & 4 to 7 do not belong to the invention, they are presented for reference only.

As may be seen in Table 2, the half cell of Examples 1-10 exhibited excellent resistance characteristics, as compared with the half cells of Comparative Example 1 and Reference Examples 1 to 4.

By way of summation and review, in the case of a high-Ni-content cathode active material, lifetime characteristics may be poor due to the weak surface structure of a cathode, a large amount of gas may be generated due to the side reaction with an electrolyte according to the increase of reactivity, and the irreversibility of a capacity source (Li ions, Mg ions, or the like) may increase.

A lithium secondary battery may include a high-Ni-content cathode active material, which exhibits high capacity, good lifetime characteristics, and good gas reduction characteristics.

One or more embodiments may provide a lithium secondary battery including a specific electrolyte together with a high-Ni-content cathode active material.

According to an embodiment, a lithium secondary battery may include a specific electrolyte together with a high-Ni-content cathode active material, the lithium secondary battery may include a film including a urethane group (-NH-CO-) formed on the surface of an electrode by an isocyanate (NCO) addition reaction, the resistance of the lithium secondary battery before and after formation may decrease, and the resistance increase rate of the lithium secondary battery due to high-temperature storage may decrease.

## Claims

**1.** A lithium secondary battery, comprising:

a cathode;
an anode; and
an electrolyte between the cathode and the anode;
wherein:

the electrolyte includes a lithium salt; a non-aqueous solvent; and an isocyanate compound,
the cathode includes a cathode active material represented by Formula 1, below,

<Formula 1> $Li_xNi_yM_{1-y}O_{2-z}A_z$

wherein, in Formula 1,

x, y, and z satisfy the following relations: $0.9 \leq x \leq 1.2$, $0.6 < y \leq 0.98$, and $0 \leq z < 0.2$,
M is Al, Mg, Mn, Co, Fe, Cr, V, Ti, Cu, B, Ca, Zn, Zr, Nb, Mo, Sr, Sb, W, or Bi, and
A is an element having an oxidation number of -1 or -2, and
the isocyanate compound is a compound represented by one of Formulae 2-2, 2-4 and 2-5:

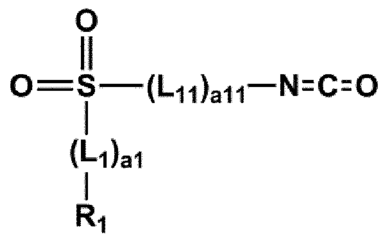

**2-2**

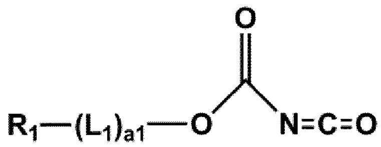

**2-4**

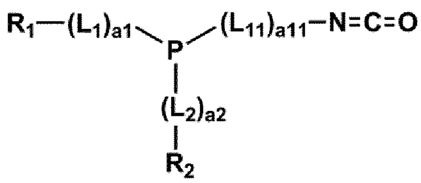

**2-5**

wherein, in Formulae 2-2, 2-4 and 2-5,

$L_1$ to $L_2$ and $L_{11}$ are each independently a single bond, *-O-*', or a substituted or unsubstituted $C_1$-$C_{30}$ alkylene group,
a1 to a2 and a11 are each independently an integer of 1 to 5,
$R_1$ is an isocyanate group, a cyano group, a nitro group, an amidino group, a hydrazino group, a hydrazono group, a substituted or unsubstituted $C_1$-$C_{20}$ alkyl group, a substituted or unsubstituted $C_2$-$C_{20}$ alkenyl group, a substituted or unsubstituted $C_1$-$C_{20}$ alkoxy group, -Si($Q_1$)($Q_2$)($Q_3$), -N($Q_1$)($Q_2$), -B($Q_1$)($Q_2$), -C(=O)($Q_1$), -S(=O)$_2$($Q_1$), or-P(=O)($Q_1$)($Q_2$),
$R_2$ is -F, -Cl, -Br, -I, an isocyanate group, a cyano group, a nitro group, an amidino group, a hydrazino group, a hydrazono group, a substituted or unsubstituted $C_1$-$C_{20}$ alkyl group, a substituted or unsubstituted $C_2$-$C_{20}$ alkenyl group, a substituted or unsubstituted $C_2$-$C_{20}$ alkynyl group, a substituted or unsubstituted $C_1$-$C_{20}$ alkoxy group, -Si($Q_1$)($Q_2$)($Q_3$), -N($Q_1$)($Q_2$), -B($Q_1$)($Q_2$), -C(=O)($Q_1$), -S(=O)$_2$($Q_1$), or-P(=O)($Q_1$)($Q_2$),
at least one substituent of the substituted $C_1$-$C_{30}$ alkylene group, the substituted $C_1$-$C_{20}$ alkyl group, the substituted $C_2$-$C_{20}$ alkenyl group, the substituted $C_2$-$C_{20}$ alkynyl group, and the substituted $C_1$-$C_{20}$ alkoxy group is deuterium, -F, -Cl, -Br, -I, a hydroxyl group, a cyano group, a nitro group, an amidino group, a hydrazino group, a hydrazono group, a $C_1$-$C_{10}$ alkyl group, a $C_2$-$C_{10}$ alkenyl group, a $C_2$-$C_{10}$ alkynyl group, or a $C_1$-$C_{20}$ alkoxy group,
$Q_1$ to $Q_3$ are each independently hydrogen, deuterium, -F, -Cl, -Br, -I, a hydroxyl group, a cyano group, a nitro group, an amidino group, a hydrazino group, hydrazono group, a $C_1$-$C_{20}$ alkyl group, a $C_2$-$C_{20}$ alkenyl group, a $C_2$-$C_{20}$ alkynyl group, or a $C_1$-$C_{20}$ alkoxy group, and
each of * and *' indicates a binding site to an adjacent atom; preferably wherein $R_1$ to $R_2$ are each independently a methyl group, an ethyl group, a n-propyl group, an isopropyl group, a n-butyl group, an isobutyl group, a sec-butyl group, a tert-butyl group, a methoxy group, an ethoxy group, an ethenyl group, an isocyanate group, or a -$CF_3$ group.

2. The lithium secondary battery as claimed in claim 1, wherein the isocyanate compound includes one isocyanate group or two isocyanate groups.

3. The lithium secondary battery as claimed in claim 1, wherein the isocyanate compound is one of compounds 3, and 8-10 below:

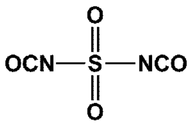
3
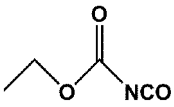
8
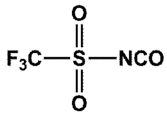
9
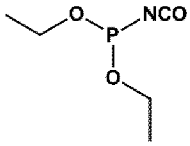
10
.

4. The lithium secondary battery as claimed in any of the preceding claims, wherein the isocyanate compound is included in the electrolyte in an amount of 0.005 wt% to 10 wt%, based on a total weight of the electrolyte; preferably wherein the isocyanate compound is included in the electrolyte in an amount of 0.01 wt% to 5 wt%, based on a total weight of the electrolyte.

5. The lithium secondary battery as claimed in any of the preceding claims, wherein the non-aqueous solvent includes ethylmethyl carbonate, methylpropyl carbonate, ethylpropyl carbonate, dimethyl carbonate, diethyl carbonate, dipropyl carbonate, propylene carbonate, ethylenecarbonate, fluoroethylene carbonate, butylene carbonate, ethyl propionate, propyl propionate, ethyl butyrate, acetonitrile, dimethyl sulfoxide, dimethyl formamide, dimethylacetamide, gamma-valerolactone, gamma-butyrolactone, or tetrahydrofuran.

6. The lithium secondary battery as claimed in any of the preceding claims, wherein the lithium salt includes $LiPF_6$, $LiBF_4$, $LiSbF_6$, $LiAsF_6$, $LiClO_4$, LiBr, $CH_3SO_3Li$, lithium chloroborane, lower aliphatic carboxylic acid lithium, lithium 4-phenylborate, lithium imide, $LiCF_3CO_2$, $LiB_{10}Cl_{10}$, $LiCF_3SO_3$, $Li(CF_3SO_2)_2N$, $LiC_4F_9SO_3$,$LiAlO_2$, $LiAlCl_4$, LiCl, LiI, or $LiN(C_xF_{2x+1}SO_2)(C_yF_{2y+1}SO_2)$, in which each of x and y is independently an integer of 1 to 20.

7. The lithium secondary battery as claimed in any of the preceding claims, wherein a concentration of the lithium salt in the electrolyte is 0.01 M to 5.0 M.

8. The lithium secondary battery as claimed in any of the preceding claims, wherein the cathode active material is represented by Formula 3 or Formula 4 below:

<Formula 3> $Li_{x'}Ni_{y'}Co_{1-y'-y''}Al_{y''}O_2$

<Formula 4> $Li_{x'}Ni_{y'}Co_{1-y'-y''}Mn_{y''}O_2$

wherein, in Formulae 3 and 4, x', y', and y" satisfy the following relations: $0.9 \leq x' \leq 1.2$, $0.6 < y' \leq 0.98$, $0 < y'' < 0.1$, and $0 < 1-y'-y'' < 0.2$; and/or wherein the anode includes an anode active material which comprises lithium metal, a metal alloyable with lithium, a transition metal oxide, a non-transition metal oxide, or a carbon material.

9. The lithium secondary battery as claimed in any of the preceding claims, further comprising a urethane group-containing film on a surface of the cathode or the anode.

10. The lithium secondary battery as claimed in claim 9, wherein the urethane group-containing film is on the surface of the anode; or wherein:

the cathode or the anode includes a -OH group or $H_2O$ on a surface thereof, and
a urethane group of the urethane group-containing film is formed by a reaction of the -OH group or the $H_2O$ with an isocyanate group of the isocyanate compound.

**Patentansprüche**

1. Lithiumsekundärbatterie, umfassend:

eine Kathode;
eine Anode; und
einen Elektrolyten zwischen der Kathode und der Anode;
wobei:

der Elektrolyt ein Lithiumsalz; ein nichtwässriges Lösungsmittel; und eine Isocyanatverbindung umfasst,

die Kathode ein Kathodenaktivmaterial umfasst, das durch die nachstehende Formel 1 dargestellt wird,

<Formel 1> $Li_xNi_yM_{1-y}O_{2-z}A_z$

wobei in Formel 1

x, y und z folgende Beziehungen erfüllen: $0{,}9 \leq x \leq 1{,}2$, $0{,}6 < y \leq 0{,}98$ und $0 \leq z < 0{,}2$,
M Al, Mg, Mn, Co, Fe, Cr, V, Ti, Cu, B, Ca, Zn, Zr, Nb, Mo, Sr, Sb, W oder Bi ist und
A ein Element mit einer Oxidationszahl von -1 oder -2 ist und
die Isocyanatverbindung eine Verbindung ist, die durch eine der Formeln 2-2, 2-4 und 2-5 dargestellt wird:

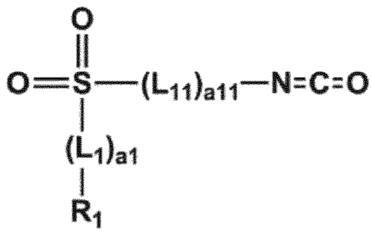

2-2

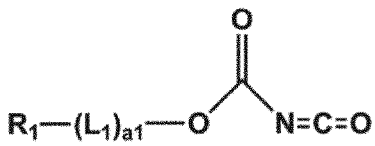

2-4

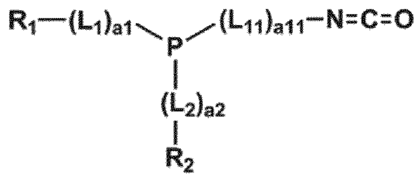

2-5

wobei in den Formeln 2-2, 2-4 und 2-5

$L_1$ bis $L_2$ und $L_{11}$ jeweils unabhängig eine Einfachbindung, *-O-*' oder eine substituierte oder unsubstituierte $C_1$-$C_{30}$-Alkylengruppe sind,
a1 bis a2 und a11 jeweils unabhängig eine ganze Zahl von 1 bis 5 sind,
$R_1$ eine Isocyanatgruppe, eine Cyanogruppe, eine Nitrogruppe, eine Amidinogruppe, eine Hydrazinogruppe, eine Hydrazonogruppe, eine substituierte oder unsubstituierte $C_1$-$C_{20}$-Alkylgruppe, eine substituierte oder unsubstituierte $C_2$-$C_{20}$-Alkenylgruppe, eine substituierte oder unsubstituierte $C_1$-$C_{20}$-Alkoxygruppe, -Si($Q_1$)($Q_2$)($Q_3$), -N($Q_1$)($Q_2$), -B($Q_1$)($Q_2$), - C(=O)($Q_1$), -S(=O)$_2$($Q_1$) oder -P(=O)($Q_1$)($Q_2$) ist,
$R_2$ -F, -Cl, -Br, -I, eine Isocyanatgruppe, eine Cyanogruppe, eine Nitrogruppe, eine Amidinogruppe, eine Hydrazinogruppe, eine Hydrazonogruppe, eine substituierte oder unsubstituierte $C_1$-$C_{20}$-Alkylgruppe, eine substituierte oder unsubstituierte $C_2$-$C_{20}$-Alkenylgruppe, eine substituierte oder unsubstituierte $C_2$-$C_{20}$-Alkinylgruppe, eine substituierte oder unsubstituierte $C_1$-$C_{20}$-Alkoxygruppe, -Si($Q_1$)($Q_2$)($Q_1$), -N($Q_1$)($Q_2$), -B($Q_1$)($Q_2$), -C(=O)($Q_1$), -S(=O)$_2$($Q_1$) oder -P(=O)($Q_1$)($Q_2$) ist,
wenigstens ein Substituent der substituierten $C_1$-$C_{30}$-Alkylengruppe, der substituierten $C_1$-$C_{20}$-Alkylgruppe, der substituierten $C_2$-$C_{20}$-Alkenylgruppe, der substituierten $C_2$-$C_{20}$-Alkinylgruppe und der substituierten $C_1$-$C_{20}$-Alkoxygruppe Deuterium, -F, -Cl, -Br, -I, eine Hydroxylgruppe, eine Cyanogruppe, eine Nitrogruppe, eine Amidinogruppe, eine Hydrazinogruppe, eine Hydrazonogruppe, eine $C_1$-$C_{10}$-Alkylgruppe, eine $C_2$-$C_{10}$-Alkenylgruppe, eine $C_2$-$C_{10}$-Alkinylgruppe oder eine $C_1$-$C_{20}$-Alkoxygruppe ist,
$Q_1$ bis $Q_3$ jeweils unabhängig Wasserstoff, Deuterium, -F, -Cl, -Br, -I, eine Hydroxylgruppe, eine Cyanogruppe, eine Nitrogruppe, eine Amidinogruppe, eine Hydrazinogruppe, eine Hydrazonogruppe, eine $C_1$-$C_{20}$-Alkylgruppe, eine $C_2$-$C_{20}$-Alkenylgruppe, eine $C_2$-$C_{20}$-Alkinylgruppe oder eine $C_1$-$C_{20}$-Alkoxygruppe sind und
jedes von * und *' eine Bindungsstelle mit einem benachbarten Atom angibt; wobei vorzugsweise $R_1$ bis

$R_2$ jeweils unabhängig eine Methylgruppe, eine Ethylgruppe, eine n-Propylgruppe, eine Isopropylgruppe, eine n-Butylgruppe, eine Isobutylgruppe, eine sec-Butylgruppe, eine tert-Butylgruppe, eine Methoxygruppe, eine Ethoxygruppe, eine Ethenylgruppe, eine Isocyanatgruppe oder eine $-CF_3$-Gruppe sind.

**2.** Lithiumsekundärbatterie nach Anspruch 1, wobei die Isocyanatverbindung eine Isocyanatgruppe oder zwei Isocyanatgruppen umfasst.

**3.** Lithiumsekundärbatterie nach Anspruch 1, wobei die Isocyanatverbindung eine der nachstehenden Verbindungen 3 und 8-10 ist:

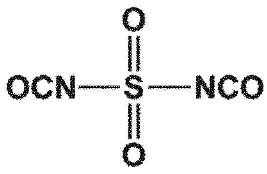
3

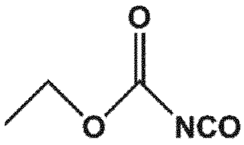
8

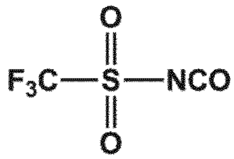
9

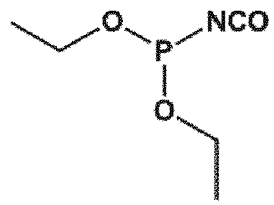
10

.

**4.** Lithiumsekundärbatterie nach einem der vorangehenden Ansprüche, wobei die Isocyanatverbindung in dem Elektrolyten in einer Menge von 0,005 Gew.-% bis 10 Gew.-%, basierend auf einem Gesamtgewicht des Elektrolyten, enthalten ist; wobei vorzugsweise die Isocyanatverbindung in dem Elektrolyten in einer Menge von 0,01 Gew.-% bis 5 Gew.-%, basierend auf einem Gesamtgewicht des Elektrolyten, enthalten ist.

**5.** Lithiumsekundärbatterie nach einem der vorangehenden Ansprüche, wobei das nichtwässrige Lösungsmittel Ethylmethylcarbonat, Methylpropylcarbonat, Ethylpropylcarbonat, Dimethylcarbonat, Diethylcarbonat, Dipropylcarbonat, Propylencarbonat, Ethylencarbonat, Fluorethylencarbonat, Butylencarbonat, Ethylpropionat, Propylpropionat, Ethylbutyrat, Acetonitril, Dimethylsulfoxid, Dimethylformamid, Dimethylacetamid, gamma-Valerolacton, gamma-Butyrolacton oder Tetrahydrofuran umfasst.

**6.** Lithiumsekundärbatterie nach einem der vorangehenden Ansprüche, wobei das Lithiumsalz $LiPF_6$, $LiBF_4$, $LiSbF_6$, $LiAsF_6$, $LiClO_4$, LiBr, $CH_3SO_3Li$, Lithiumchlorboran, niedere aliphatische Carbonsäure Lithium, Lithium-4-phenylborat, Lithiumimid, $LiCF_3CO_2$, $LiB_{10}Cl_{10}$, $LiCF_3SO_3$, $Li(CF_3SO_2)_2N$, $LiC_4F_9SO_3$,$LiAlO_2$, $LiAlCl_4$, LiCl, LiI oder $LiN(C_xF_{2x+1}SO_2)(C_yF_{2y+1}SO_2)$ umfasst, wobei jedes von x und y unabhängig eine ganze Zahl von 1 bis 20 ist.

**7.** Lithiumsekundärbatterie nach einem der vorangehenden Ansprüche, wobei eine Konzentration des Lithiumsalzes in dem Elektrolyten 0,01 M bis 5,0 M beträgt.

**8.** Lithiumsekundärbatterie nach einem der vorangehenden Ansprüche, wobei das Kathodenaktivmaterial durch die nachstehende Formel 3 oder Formel 4 dargestellt wird:

<Formel 3> $Li_{x'}Ni_{y'}Co_{1-y'-y''}Al_{y''}O_2$

<Formel 4> $Li_{x'}Ni_{y'}CO_{1-y'y''}Mn_{y''}O_2$

wobei in den Formeln 3 und 4 x', y' und y" die folgenden Beziehungen erfüllen: $0,9 \leq x' \leq 1,2$, $0,6 < y' \leq 0,98$, $0 < y'' < 0,1$ und $0 < 1-y'-y'' < 0,2$; und/oder wobei die Anode ein Anodenaktivmaterial umfasst, das metallisches Lithium, ein mit Lithium legierbares Metall, ein Übergangsmetalloxid, ein Nichtübergangsmetalloxid oder ein Kohlenstoffmaterial umfasst.

**9.** Lithiumsekundärbatterie nach einem der vorangehenden Ansprüche, die ferner einen urethangruppenhaltigen Film auf einer Oberfläche der Kathode oder der Anode umfasst.

**10.** Lithiumsekundärbatterie nach Anspruch 9, wobei der urethangruppenhaltige Film sich auf der Oberfläche der Anode befindet; oder wobei:

die Kathode oder die Anode auf einer Oberfläche davon eine -OH-Gruppe oder $H_2O$ umfasst und
eine Urethangruppe des urathangruppenhaltigen Films durch eine Reaktion der OH-Gruppe oder des $H_2O$ mit

einer Isocyanatgruppe der Isocyanatverbindung ausgebildet wird.

## Revendications

**1.** Batterie secondaire au lithium comprenant :

une cathode ;
une anode ; et
un électrolyte entre la cathode et l'anode ;
dans laquelle :

l'électrolyte contient un sel de lithium ; un solvant non aqueux ; et un composé isocyanate,
la cathode contient un matériau actif de cathode représenté par la formule 1 ci-dessous,

<formule 1> $Li_xNi_yM_{1-y}O_{2-z}A_z$

où, dans la formule 1,

x, y et z satisfont aux relations suivantes : $0{,}9 \leq x \leq 1{,}2$, $0{,}6 < y \leq 0{,}98$, et $0 \leq z < 0{,}2$,
M est Al, Mg, Mn, Co, Fe, Cr, V, Ti, Cu, B, Ca, Zn, Zr, Nb, Mo, Sr, Sb, W ou Bi, et
A est un élément ayant un état d'oxydation de -1 ou -2, et
le composé isocyanate est un composé représenté par l'une des formules 2-2, 2-4 et 2-5 :

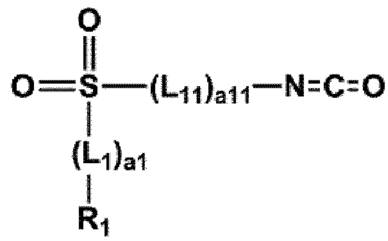

**2-2**

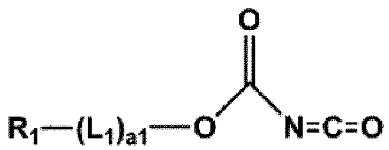

**2-4**

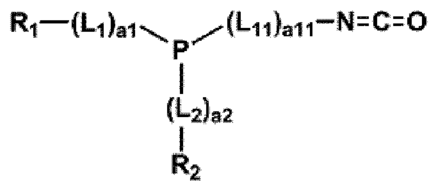

**2-5**

où, dans les formules 2-2, 2-4 et 2-5,

chacun de $L_1$ à $L_2$ et $L_{11}$ est indépendamment une liaison simple, *-O-*', ou un groupe alkylène en $C_1$ à $C_{30}$ substitué ou non substitué,
chacun de a1, a2 et a11 est indépendamment un entier de 1 à 5,
$R_1$ est un groupe isocyanate, un groupe cyano, un groupe nitro, un groupe amidino, un groupe hydrazino, un groupe hydrazono, un groupe alkyle en $C_1$ à $C_{20}$ substitué ou non substitué, un groupe alcényle en $C_2$ à $C_{20}$ substitué ou non substitué, un groupe alkoxy en $C_1$ à $C_{20}$ substitué ou non substitué, $-Si(Q_1)(Q_2)(Q_3)$, $-N(Q_1)(Q_2)$, $-B(Q_1)(Q_2)$, $-C(=O)(Q_1)$, $-S(=O)_2(Q_1)$, ou $-P(=O)(Q_1)(Q_2)$,
$R_2$ est -F, -Cl, -Br, -I, un groupe isocyanate, un groupe cyano, un groupe nitro, un groupe amidino, un groupe hydrazino, un groupe hydrazono, un groupe alkyle en $C_1$ à $C_{20}$ substitué ou non substitué, un

groupe alcényle en $C_2$ à $C_{20}$ substitué ou non substitué, un groupe alcynyle en $C_2$ à $C_{20}$ substitué ou non substitué, un groupe alkoxy en $C_1$ à $C_{20}$ substitué ou non substitué, $-Si(Q_1)(Q_2)(Q_3)$, $-N(Q_1)(Q_2)$, $-B(Q_1)(Q_2)$, $-C(=O)(Q_1)$, $-S(=O)_2(Q_1)$, ou $-P(=O)(Q_1)(Q_2)$,

au moins un substituant du groupe alkylène en $C_1$ à $C_{30}$ substitué, du groupe alkyle en $C_1$ à $C_{20}$ substitué, du groupe alcényle en $C_2$ à $C_{20}$ substitué, du groupe alcynyle en $C_2$ à $C_{20}$ substitué, et du groupe alkoxy en $C_1$ à $C_{20}$ substitué, est le deutérium, -F, -Cl, -Br, -I, un groupe hydroxyle, un groupe cyano, un groupe nitro, un groupe amidino, un groupe hydrazino, un groupe hydrazono, un groupe alkyle en $C_1$ à $C_{10}$, un groupe alcényle en $C_2$ à $C_{10}$, un groupe alcynyle en $C_2$ à $C_{10}$, ou un groupe alkoxy en $C_1$ à $C_{20}$,

chacun de $Q_1$ à $Q_3$ est indépendamment l'hydrogène, le deutérium, -F, -Cl, -Br, -I, un groupe hydroxyle, un groupe cyano, un groupe nitro, un groupe amidino, un groupe hydrazino, un groupe hydrazono, un groupe alkyle en $C_1$ à $C_{20}$, un groupe alcényle en $C_2$ à $C_{20}$, un groupe alcynyle en $C_2$ à $C_{20}$, ou un groupe alkoxy en $C_1$ à $C_{20}$, et

chacun de * et *' indique un site de liaison à un atome adjacent ;

de préférence où chacun de $R_1$ et $R_2$ est indépendamment un groupe méthyle, un groupe éthyle, un groupe n-propyle, un groupe isopropyle, un groupe n-butyle, un groupe isobutyle, un groupe sec-butyle, un groupe tert-butyle, un groupe méthoxy, un groupe éthoxy, un groupe éthényle, un groupe isocyanate, ou un groupe $-CF_3$.

**2.** Batterie secondaire au lithium selon la revendication 1, dans laquelle le composé isocyanate contient un seul groupe isocyanate ou deux groupes isocyanate.

**3.** Batterie secondaire au lithium selon la revendication 1, dans laquelle le composé isocyanate est l'un des composés 3 et 8 à 10 ci-dessous :

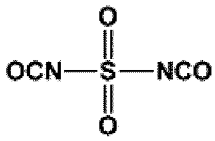
3

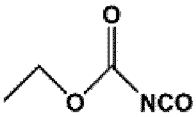
8

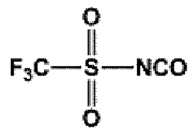
9

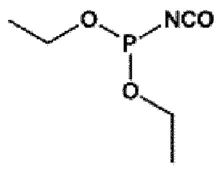
10
.

**4.** Batterie secondaire au lithium selon l'une quelconque des revendications précédentes, dans laquelle le composé isocyanate est contenu dans l'électrolyte en une quantité de 0,005 % en poids à 10 % en poids, par rapport au poids total de l'électrolyte ; de préférence dans laquelle le composé isocyanate est contenu dans l'électrolyte en une quantité de 0,01 % en poids à 5 % en poids, par rapport au poids total de l'électrolyte.

**5.** Batterie secondaire au lithium selon l'une quelconque des revendications précédentes, dans laquelle le solvant non aqueux comprend le carbonate d'éthylméthyle, le carbonate de méthylpropyle, le carbonate d'éthylpropyle, le carbonate de diméthyle, le carbonate de diéthyle, le carbonate de dipropyle, le carbonate de propylène, le carbonate d'éthylène, le carbonate de fluoréthylène, le carbonate de butylène, le propionate d'éthyle, le propionate de propyle, le butyrate d'éthyle, l'acétonitrile, le diméthylsulfoxyde, le diméthylformamide, le diméthylacétamide, la gamma-valérolactone, la gamma-butyrolactone, ou le tétrahydrofurane.

**6.** Batterie secondaire au lithium selon l'une quelconque des revendications précédentes, dans laquelle le sel de lithium comprend $LiPF_6$, $LiBF_4$, $LiSbF_6$, $LiAsF_6$, $LiClO_4$, LiBr, $CH_3SO_3Li$, le chloroborane lithié, un acide carboxylique aliphatique inférieur lithié, le 4-phényl-borate de lithium, le lithium-imide, $LiCF_3CO_2$, $LiB_{10}Cl_{10}$, $LiCF_3SO_3$, $Li(CF_3SO_2)_2N$, $LiC_4F_9SO_3$,$LiAlO_2$, $LiAlCl_4$, LiCl, LiI, ou $LiN(C_xF_{2x+1}SO_2)(C_yF_{2y+1}SO_2)$ dans lequel chacun de x et y est indépendamment un entier de 1 à 20.

**7.** Batterie secondaire au lithium selon l'une quelconque des revendications précédentes, dans laquelle la concentration du sel de lithium dans l'électrolyte est de 0,01 M à 5,0 M.

**8.** Batterie secondaire au lithium selon l'une quelconque des revendications précédentes, dans laquelle le matériau actif de cathode est représenté par la formule 3 ou la formule 4 ci-dessous :

<formule 3> $Li_{x'}Ni_{y'}CO_{1-y'-y''}Al_{y''}O_2$

<formule 4> $Li_{x'}Ni_{y'}Co_{1-y'-y''}Mn_{y''}O_2$

où, dans les formules 3 et 4, x', y' et y'' satisfont aux relations suivantes : $0,9 \leq x' \leq 1,2$, $0,6 < y' \leq 0,98$, $0 < y'' < 0,1$, et $0 < 1-y'-y'' < 0,2$ ; et/ou

dans laquelle l'anode contient un matériau actif d'anode qui comprend du lithium métallique, un métal alliable au lithium, un oxyde de métal de transition, un oxyde non de métal de transition, ou un matériau carboné.

**9.** Batterie secondaire au lithium selon l'une quelconque des revendications précédentes, comprenant en outre un film contenant un groupe uréthane sur une surface de la cathode ou de l'anode.

**10.** Batterie secondaire au lithium selon la revendication 9, dans laquelle le film contenant un groupe uréthane est sur la surface de l'anode ; ou dans laquelle :

la cathode ou l'anode contient un groupe -OH ou $H_2O$ sur une surface de celle-ci, et

un groupe uréthane du film contenant un groupe uréthane est formé par une réaction du groupe -OH ou de $H_2O$ avec un groupe isocyanate du composé isocyanate.

FIG. 1

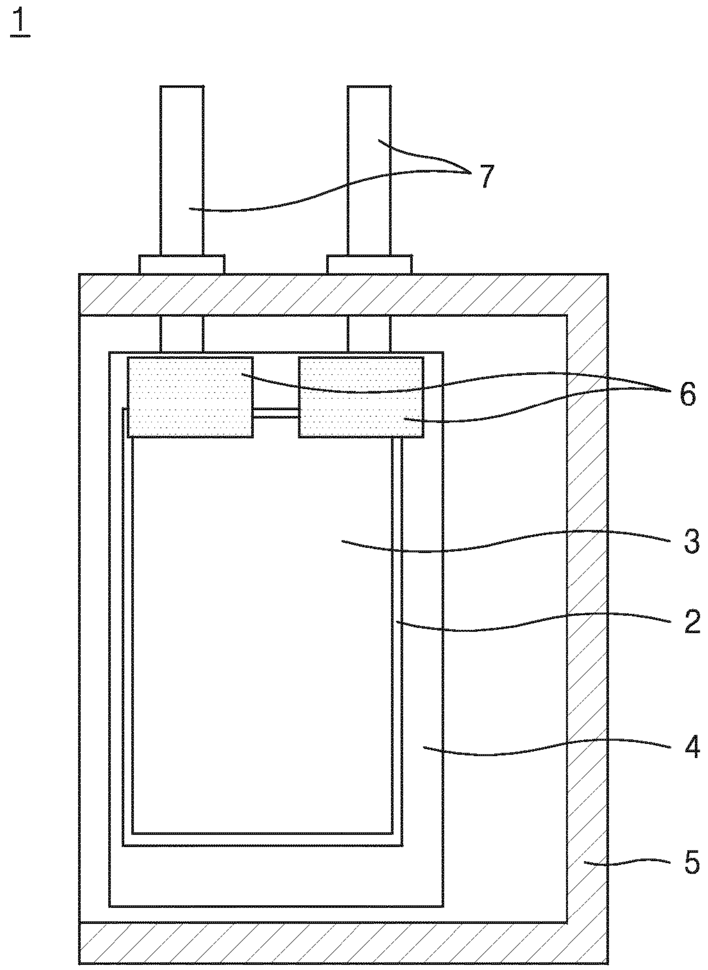

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3203568 A1
- US 20170250443 A1
- US 20160351963 A1
- EP 3396769 A1
- JP 2011014379 A
- EP 2999030 A1